# EUROPÄISCHE PATENTSCHRIFT

(11) **EP 3 906 270 B1**
(45) Veröffentlichungstag und Bekanntmachung des Hinweises auf die Patenterteilung: **19.03.2025**
(21) Anmeldenummer: 20700007.6
(22) Anmeldetag: 03.01.2020
(51) Int. Cl.: C08G 18/83, C08G 18/32, C08G 18/38, C08G 18/44

(54) **HARTPHASEN-MODIFIZIERTES THERMOPLASTISCHES POLYURETHAN**
SOLID PHASE-MODIFIED THERMOPLASTIC POLYURETHANE
POLYURÉTHANE THERMOPLASTIQUE MODIFIÉ PAR PHASE DURE

(30) Priorität: 04.01.2019 EP 19150306
(43) Veröffentlichungstag der Anmeldung: 10.11.2021
(73) Patentinhaber: BASF SE, 67056 Ludwigshafen am Rhein (DE)
(72) Erfinder: ROY, Nabarun, Wyandotte, Michigan 48192 (US); KEMPFERT, Dirk, 49448 Lemfoerde (DE); MUEHREN, Oliver, 49448 Lemfoerde (DE); BERTELS, Alfons, 49448 Lemfoerde (DE); HARTWIG, Sebastian, 48165 Muenster (DE)
(74) Vertreter: BASF IP Association
(86) Internationale Anmeldenummer: PCT/EP2020/050084
(87) Internationale Veröffentlichungsnummer: WO 2020/141218

(56) Entgegenhaltungen:
- US-A1- 2018 291 141

## Beschreibung

Die vorliegende Erfindung betrifft ein thermoplastisches Polyurethan, erhältlich oder erhalten nach einem Verfahren, umfassend die Umsetzung eines thermoplastischen Polyester (PE-1) mit einem Diamin (D1) unter Erhalt einer Zusammensetzung (Z1) enthaltend einen Amid (PA-1), sowie die Umsetzung der erhaltenen Zusammensetzung (Z1) mit einer Isocyanatzusammensetzung (I1), enthaltend mindestens ein Polyisocyanat, und einer Polyolzusammensetzung (P1), wobei das Diamin (D1) ein Molekulargewicht im Bereich von 50 g/mol bis 700 g/mol aufweist. Weiterhin betrifft die vorliegende Erfindung ein Verfahren zur Herstellung eines derartigen thermoplastischen Polyurethans sowie Formkörper, enthaltend ein erfindungsgemäßes thermoplastisches Polyurethan.

Thermoplastische Polyurethane sind allgemein bekannt wegen ihrer guten mechanischen Eigenschaften, ihrer hohen Abriebfestigkeit und der hohen Elastizität. Sie finden deshalb vielfältig Verwendung in unterschiedlichsten Anwendungen.

US 2018/291141 A1 offenbart ein Verfahren zur Herstellung von thermoplastischen Polyurethanen und das entsprechende thermoplastische Polyurethan, bei dem ein Diamin als Kettenverlängerer eingesetzt wird.

Auch im Automobilbereich werden thermoplastische Polyurethane vielfältig eingesetzt. Für einzelne Anwendungen, beispielsweise bei der Verwendung für Ladekabel für Hybrid- und Elektorfahrzeuge ist eine hohe Wärmestabilität erforderlich. Maßgebliche Normen für Kabel in Automobilanwendungen sind dabei die LV 112 und die ISO 6722, die die Materialien nach bestimmten Temperaturklassen einstufen.

Für neue Anwendungen wählen die Hersteller für motornahe Anwendungen oft Kabel, die mit der Temperaturklasse D bis 150 °C geeignet sind. Beispiele hierfür sind der Motorkabelsatz oder der Getriebeanschluss. Elektro- und Hybridfahrzeuge stellen dabei besonders hohe Anforderungen an den Kabelsatz und die Leitungen, die mit den bisher üblichen Bordnetzen nur eingeschränkt vergleichbar sind. So müssen diese Kabel - bedingt durch Hochspannungen bis zu 1000 V und entsprechend hohe Ströme - deutlich höhere Temperaturen aushalten als ihre Vorgänger. Die Kabel müssen dem üblichen Wickeltest nach einer 3000h Heißluftalterung bei 150°C standhalten.

Für die Temperaturklasse D (bis 150 °C) wird unter anderem Ethylen-Tetrafluorethylen-Copolymere (ETFE) eingesetzt. Dabei werden im Brandfall bei Verwendung von ETFE korrosive Gase gebildet, was den Einsatz dieser Materialien häufig einschränkt.

Ein weiterer Werkstoff sind spezielle vernetzte Polyolefincompounds. Die vernetzten Polyolefincompounds sind jedoch wegen der nötigen nachträglichen Vernetzung durch Bestrahlen oder Vulkanisation nur sehr aufwändig und mit hohen Kosten herstellbar und kommen oft wegen der chemischen Beständigkeit und der geringen mechanischen Belastbarkeit an ihre Grenzen. Die vernetzten Werkstoffe haben außerdem den Nachteil, dass sie nicht recyclebar sind und beim Anspritzen von Steckern und Tüllen Probleme mit der Wasserdichtigkeit bereiten.

Die mittlerweile überwiegend angewandte LV 112 bringt darüber hinaus Verschärfungen bezüglich der Hydrolysebeständigkeit bei hohen Temperaturen. Während im Rahmn der ISO 6722 Standzeiten von 1.000 bis 3000 Stunden bei 85 Grad Celsius und 85 Prozent relativer Feuchte erforderlich sind, fordert die LV 112 zwingend eine Standzeit von 3000 Stunden.

Die übrigen Voraussetzungen für Kabelummantelungen sind in beiden Regelwerken weitgehend identisch geregelt und bei den hierfür angebotenen Materialien heute Standard. Dazu gehören Unempfindlichkeit gegen Kälte, Medienbeständigkeit und Hemmung des Pilzwachstums sowie Kompatibilität mit weiteren im Kabelsatz befindlichen Materialien wie Klebebändern, Schrumpfschläuchen und Steckern.

Für viele Anwendungen sind jedoch keine Werkstoffe vorhanden, die gute mechanische Eigenschaften mit den besonderen Anforderungen von Automobilanwendungen vereinen. Auch viele herkömmliche thermoplastische Polyurethane zersetzen sich bei diesen Beanspruchungen.

Eine der vorliegenden Erfindung zugrundeliegende Aufgabe war es daher, thermoplastische Polyurethane bereitzustellen, die gute mechanische Eigenschaften aufweisen und eine hohe Temperaturstabilität.

Erfindungsgemäß wird diese Aufgabe gelöst durch ein thermoplastisches Polyurethan, erhältlich oder erhalten nach einem Verfahren, umfassend die Umsetzung einer Isocyanatzusammensetzung (11), enthaltend mindestens ein Polyisocyanat, und einer Polyolzusammensetzung (P1),

wobei mindestens ein Diamin (D1) mit einem Molekulargewicht im Bereich von 50 g/mol bis 700 g/mol eingesetzt wird und
wobei das Diamin D1 vor der Umsetzung mit der Isocyanatzusammensetzung (I1) und der Polyolzusammensetzung (P1) mit einem thermoplastischen Polyester (PE-1) zu einem Amid (PA-1) umgesetzt wird.

Erfindungsgemäß wird diese Aufgabe somit auch gelöst durch ein thermoplastisches Polyurethan, erhältlich oder erhalten nach einem Verfahren, umfassend die Umsetzung einer Isocyanatzusammensetzung (11), enthaltend mindestens ein Polyisocyanat, und einer Polyolzusammensetzung (P1),
wobei mindestens ein Diamin (D1) mit einem Molekulargewicht im Bereich von 50 g/mol bis 700 g/mol vor der Umsetzung mit der Isocyanatzusammensetzung (I1) und der Polyolzusammensetzung (P1) mit einem thermoplastischen Polyester (PE-1) zu einem Amid (PA-1) umgesetzt wird.

Demgemäß betrifft die vorliegende Erfindung auch ein thermoplastisches Polyurethan erhältlich oder erhalten nach einem Verfahren, umfassend die Schritte (i) und (ii)
(i) Umsetzung eines thermoplastischen Polyester (PE-1) mit einem Diamin (D1) unter Erhalt einer Zusammensetzung (Z1) enthaltend einen Amid (PA-1),
(ii) Umsetzung der gemäß Schritt (i) erhaltenen Zusammensetzung (Z1) mit einer Isocyanatzusammensetzung (I1), enthaltend mindestens ein Polyisocyanat, und einer Polyolzusammensetzung (P1),
wobei das Diamin (D1) ein Molekulargewicht im Bereich von 50 g/mol bis 700 g/mol aufweist.

Gemäß einer alternativen Ausführungsform betrifft die vorliegende Erfindung auch ein thermoplastisches Polyurethan wie zuvor beschrieben, wobei das Diamin (D1) als Kettenverlängerer eingesetzt wird.

Somit betrifft die vorliegende Erfindung gemäß einer weiteren Ausführungsform auch ein thermoplastisches Polyurethan wie zuvor beschrieben, wobei das Verfahren die Umsetzung der Komponenten (a) bis (c) umfasst:
(a) der Isocyanatzusammensetzung (11), enthaltend mindestens ein Polyisocyanat,
(b) der Polyolzusammensetzung (P1), und
(c) des Diamins (D1) als Kettenverlängerer.

Sofern das Diamin (D1) als Kettenverlängerer eingesetzt wird, kann das Verfahren unter gängigen Bedingungen durchgeführt werden. Besonders geeignet als Kettenverlängerer sind Diamine (D1), die ausgewählt sind aus Verbindungen der allgemeinen Formel (I) oder (II): 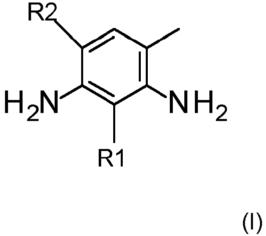
wobei R1 und R2 unabhängig voneinander ausgewählt sind aus der Gruppe bestehend aus O-CH₃, CH₂CH₃, S-CH₃, NH-CH₃, N(CH₃)₂ und H_{,},
   oder 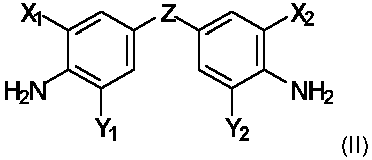 wobei
   a) X₁ = = Y₂ = H,
   b) X₁ = X₂ = Y₁ = Y₂ = CH₃
   c) X₁ = X₂ = Y₁ = Y₂ = iso Propyl
   d) X₁ = X₂ = Y₁ = Y₂ = C₂H₅,
   e) X₁ = X₂ = Y₁ = Y₂ = Butyl
   f) X₁ = X₂ = Y₁ = Y₂ = tert. Butyl,
   g) X₁ = X₂ = H und Y₁ = Y₂ = CH₃,
   h) X₁ = X₂ = H und Y₁ = Y₂ = iso Propyl
   i) X₁ = X₂ = H und Y₁ = Y₂ = C₂H₅
   j) X₁ = X₂ = H und Y₁ = Y₂ = Butyl oder
   k) X₁ = X₂ = H und Y₁ = Y₂ = tert. Butyl
und Z ausgewählt ist aus der Gruppe bestehend aus CH₂, CHCH₃, C(CH₃)₂, O und S.
Demgemäß betrifft die vorliegende Erfindung auch ein thermoplastisches Polyurethan erhältlich oder erhalten nach einem Verfahren, umfassend die Umsetzung einer Isocyanatzusammensetzung (11), enthaltend mindestens ein Polyisocyanat, und einer Polyolzusammensetzung (P1),
wobei mindestens ein Diamin (D1) mit einem Molekulargewicht im Bereich von 50 g/mol bis 700 g/mol eingesetzt wird, ausgewählt aus Verbindungen der allgemeinen Formel (I) oder (II): 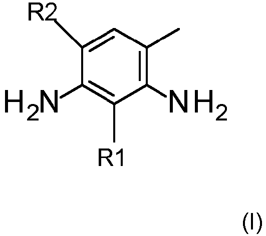
wobei R1 und R2 unabhängig voneinander ausgewählt sind aus der Gruppe bestehend aus O-CH₃, CH₂CH₃, S-CH₃, NH-CH₃, N(CH₃)₂ und H_{,},
   oder 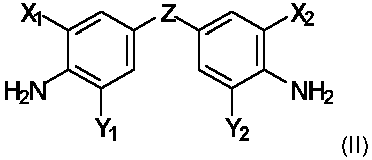 wobei
   a) X₁ = X₂ = Y₁ = Y₂ = H,
   b) X₁ = X₂ = Y₁ = Y₂ = CH₃
   c) X₁ = X₂ = Y₁ = Y₂ = iso Propyl
   d) X₁ = X₂ = Y₁ = Y₂ = C₂H₅,
   e) X₁ = X₂ = Y₁ = Y₂ = Butyl
   f) X₁ = X₂ = Y₁ = Y₂ = tert. Butyl,
   g) X₁ = X₂ = H und Y₁ = Y₂ = CH₃,
   h) X₁ = X₂ = H und Y₁ = Y₂ = iso Propyl
   i) X₁ = X₂ = H und Y₁ = Y₂ = C₂H₅
   j) X₁ = X₂ = H und Y₁ = Y₂ = Butyl oder
   k) X₁ = X₂ = H und Y₁ = Y₂ = tert. Butyl
und Z ausgewählt ist aus der Gruppe bestehend aus CH₂, CHCH₃, C(CH₃)₂, O und S.

Gemäß einer Ausführungsform umfasst das erfindungsgemäße Verfahren insbesondere die Schritte (i) und (ii). Gemäß Schritt (i) wird ein thermoplastischer Polyester (PE-1) mit einem Diamin (D1) unter Erhalt einer Zusammensetzung (Z1) enthaltend einen Amid (PA-1) umgesetzt, wobei das Diamin (D1) ein Molekulargewicht im Bereich von 50 g/mol bis 700 g/mol aufweist. Gemäß Schritt (ii) des erfindungsgemäßen Verfahrens die gemäß Schritt (i) erhaltene Zusammensetzung (Z1) mit einer Isocyanatzusammensetzung (11), enthaltend mindestens ein Polyisocyanat, und einer Polyolzusammensetzung (P1) umgesetzt.

Durch die erfindungsgemäße Verfahrensführung werden thermoplastische Polyurethane erhalten, die eine modifizierte Hartphase aufweisen. Überraschenderweise hat sich gezeigt, dass durch die gezielte schrittweise Umsetzung der Komponenten thermoplastische Polyurethane erhalten werden, die gute mechanische Eigenschaften aufweisen und eine hohe Temperaturbeständigkeit. Dies macht sie insbesondere für die Verwendung als Kabelummantelungen geeignet. Für viele Anwendungen im Bereich der Kabelummantellungen ist es weiterhin vorteilhaft, dass aus den erfindungsgemäßen thermoplastischen Polyurethanen mittels Extrusion oder Spritzguss erhaltene Formkörper eine matte Oberfläche aufweisen.

Die Umsetzung gemäß Schritt (i) erfolgt vorzugsweise kontinuierlich. Gemäß einer weiteren Ausführungsform betrifft die vorliegende Erfindung demgemäß ein Verfahren zur Herstellung eines thermoplastischen Polyurethans wie zuvor beschrieben, wobei die Umsetzung gemäß Schritt (i) kontinuierlich erfolgt.

Gemäß Schritt (i) wird der thermoplastische Polyester (PE-1) mit dem Diamin (D1). Dabei wird im Rahmen der vorliegenden Erfindung ein Amid gebildet. Grundsätzlich können als Diamin (D1) alle gängigen Diamine eingesetzt werden, die ein Molekulargewicht im Bereich von 50 g/mol bis 700 g/mol aufweisen, bevorzugt im Bereich von 50 bis 500 g/mol. Geeignet sind beispielsweise aliphatische oder aromatische Diamine. Erfindungsgemäß sind aromatische Diamine bevorzugt.

Es hat sich insbesondere als vorteilhaft erwiesen, solche Diamine einzusetzen, die aromatische Strukturen aufweisen. Bevorzugt werden im Rahmen der vorliegenden Erfindung Diamine (D1) eingesetzt, die ausgewählt sind aus Verbindungen der allgemeinen Formel (I) oder (II): 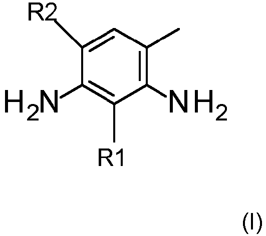
wobei R1 und R2 unabhängig voneinander ausgewählt sind aus der Gruppe bestehend aus O-CH₃, CH₂CH₃, S-CH₃, NH-CH₃, N(CH₃)₂ und H_{,},
   oder 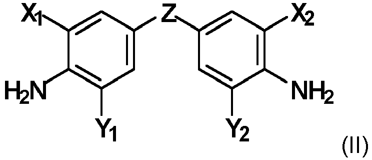 wobei
   a) X₁ = = Y₂ = H,
   b) X₁ = X₂ = Y₁ = Y₂ = CH₃
   c) X₁ = X₂ = Y₁ = Y₂ = iso Propyl
   d) X₁ = X₂ = Y₁ = Y₂ = C₂H₅,
   e) X₁ = X₂ = Y₁ = Y₂ = Butyl
   f) X₁ = X₂ = Y₁ = Y₂ = tert. Butyl,
   g) X₁ = X₂ = H und Y₁ = Y₂ = CH₃,
   h) X₁ = X₂ = H und Y₁ = Y₂ = iso Propyl
   i) X₁ = X₂ = H und Y₁ = Y₂ = C₂H₅
   j) X₁ = X₂ = H und Y₁ = Y₂ = Butyl oder
   k) X₁ = X₂ = H und Y₁ = Y₂ = tert. Butyl
und Z ausgewählt ist aus der Gruppe bestehend aus CH₂, CHCH₃, C(CH₃)₂, O und S.

Gemäß einer weiteren Ausführungsform betrifft die vorliegende Erfindung demgemäß ein thermoplastisches Polyurethan wie zuvor beschrieben, wobei das Diamin (D1) ausgewählt ist aus Verbindungen der allgemeinen Formel (I) oder (II): 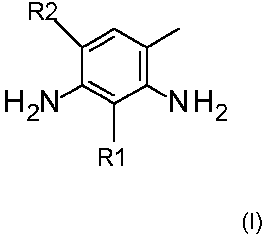 wobei R1 und R2 unabhängig voneinander ausgewählt sind aus der Gruppe bestehend aus O-CH₃, CH₂CH₃, S-CH₃, NH-CH₃, N(CH₃)₂ und H_{,},
oder 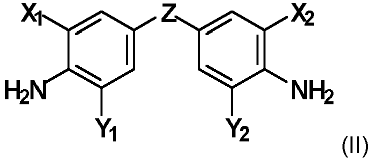 wobei
a) X₁ = X₂ = Y₁ = Y₂ = H,
b) X₁ = X₂ = Y₁ = Y₂ = CH₃
c) X₁ = X₂ = Y₁ = Y₂ = iso Propyl
d) X₁ = X₂ = Y₁ = Y₂ = C₂H₅,
e) X₁ = X₂ = Y₁ = Y₂ = Butyl
f) X₁ = X₂ = Y₁ = Y₂ = tert. Butyl,
g) X₁ = X₂ = H und Y₁ = Y₂ = CH₃,
h) X₁ = X₂ = H und Y₁ = Y₂ = iso Propyl
i) X₁ = X₂ = H und Y₁ = Y₂ = C₂H₅
j) X₁ = X₂ = H und Y₁ = Y₂ = Butyl oder
k) X₁ = X₂ = H und Y₁ = Y₂ = tert. Butyl
und Z ausgewählt ist aus der Gruppe bestehend aus CH₂, CHCH₃, C(CH₃)₂, O und S.

Besonders bevorzugt wird im Rahmen der vorliegenden Erfindung ein Diamin (D1) eingesetzt, das die allgemeine Formel (III) aufweist: 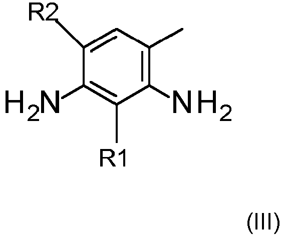 wobei R1 = R2 = S-CH₃ oder R1 = R2 = CH₂CH₃ ist.

Gemäß einer weiteren Ausführungsform betrifft die vorliegende Erfindung demgemäß ein thermoplastisches Polyurethan wie zuvor beschrieben, wobei das Diamin (D1) die allgemeine Formel (III) aufweist: 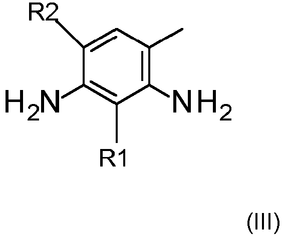 wobei R1 = R2 = S-CH₃ oder R1 = R2 = CH₂CH₃ ist.

Im Rahmen der vorliegenden Erfindung können auch Mischungen der genannten Diamine eingesetzt werden.

Gemäß Schritt (i) wird ein thermoplastischer Polyester (PE-1) eingesetzt. Erfindungsgemäß geeignete thermoplastische Polyester sind an sich bekannt. Geeignete Polyester sind aus mindestens einer Dicarbonsäure und mindestens einer geeigneten Dihydroxyverbindung aufgebaut. Die Polyester können beispielsweise hergestellt werden durch Polykondensation von aliphatischen oder aromatischen Dicarbonsäuren oder Mischungen aus aromatischen und aliphatischen und/oder cycloaliphatischen Dicarbonsäuren sowie den entsprechenden esterbildenden Derivaten, wie z.B. Dicarbonsäureanhydriden, Mono- und/oder Diestern mit zweckmäßigerweise maximal 4 Kohlenstoffatomen im Alkoholrest, mit aliphatischen Dihydroxyverbindungen bei erhöhten Temperaturen, beispielsweise von 160 bis 260°C, in Gegenwart oder Abwesenheit von Veresterungskatalysatoren.

Geeignet sind erfindungsgemäß aromatische Dicarbonsäuren, beispielsweise Naphthalindicarbonsäuren, Isophthalsäure und insbesondere Terephthalsäure oder Mischungen dieser Dicarbonsäuren. Weiterhin geeignet sind im Rahmen der vorliegenden Erfindung aliphatische und/oder cycloaliphatische Dicarbonsäuren , beispielsweise mit 4 bis 14 Kohlenstoffatomen, wie z.B. Bernstein-, Adipin-, Azelain-, Sebacin-, Dodecandisäure und/oder Cyclohexandicarbonsäure.

Erfindungsgemäß können auch Polyester funktionalisierter Dicarbonsäuren eingesetzt werden, beispielsweise auf Milchsäure basierende Polyester.

Als weitere Aufbaukomponente der thermoplastischen Polyester (PE-1) können im Rahmen der vorliegenden Erfindung aliphatische oder aromatische Dihydroxyverbindungen eingesetzt werden. Als aliphatische Dihydroxyverbindungen kommen vorzugsweise Alkandiole mit 2 bis 6 Kohlenstoffatomen und Cycloalkandiole mit 5 bis 7 Kohlenstoffatomen in Betracht. Beispielhaft genannt seien und bevorzugt angewandt werden 1,2-Ethandiol, 1,3-Propandiol, 1,4-Butandiol, 1,6-Hexandiol, Neopentylglykol und 1,4-Cyclohexandiol oder Mischungen aus mindestens zwei der genannten Diole.

Als thermoplastische Polyester geeignet sind insbesondere thermoplastische Polyester ausgewählt aus der Gruppe bestehend aus Polyalkylenterephthalaten und Poly-L-Milchsäure.

Gemäß einer weiteren Ausführungsform betrifft die vorliegende Erfindung auch ein thermoplastisches Polyurethan wie zuvor beschrieben, wobei der thermoplastische Polyester (PE-1) ausgewählt ist aus der Gruppe bestehend aus Polyalkylenterephthalaten und Poly-L-Milchsäure.

Geeignete Molekulargewichtsbereiche (Mn) des eingesetzten Polyesters liegen erfindungsgemäß im Bereich von 2000 bis 100000, besonders bevorzugt im Bereich von 10000 bis 50000.

Gemäß einer weiteren Ausführungsform betrifft die vorliegende Erfindung auch ein thermoplastisches Polyurethan wie zuvor beschrieben, wobei der thermoplastische Polyester (PE-1) ein Molekulargewicht im Bereich von 1000 g/mol bis 60000 g/mol, beispielsweise auch im Bereich von 1500 g/mol bis 5000 g/mol, aufweist.

Soweit nicht anders angegeben erfolgt im Rahmen der vorliegenden Erfindung die Bestimmung der gewichtsmittleren Molekulargewichte Mw der thermoplastischen Polyester, gelöst in HFIP (Hexafluorisopropanol) mittels GPC. Die Bestimmung des Molekulargewichts erfolgt mittels zwei hintereinandergeschalteter GPC-Säulen (PSS-Gel; 100A; 5µ; 300*8mm, Jordi- Gel DVB; MixedBed; 5µ; 250*10mm; Säulentemperatur 60°C; Fluss 1 mL/min; RI-Detektor). Dabei erfolgt die Kalibrierung mit Polymethylmethacrylat (EasyCal; Fa. PSS, Mainz), als Laufmittel wird HFIP verwendet.

Beispielsweise kann der Anteil des Diamins bezogen auf den eingesetzten Polyester im Bereich von 5 bis 20 % liegen.

Gemäß Schritt (i) wird eine Zusammensetzung (Z1) erhalten, die einen Amid (PA-1) enthält. Die Zusammensetzung (Z1) kann im Rahmen er vorliegenden Erfindung weitere Komponenten enthalten, beispielsweise nicht umgesetzten thermoplastischen Polyester oder nicht umgesetztes Diamin. Dabei ist die Zusammensetzung (Z1) üblicherweise ein Gemisch, das neben dem Amid (PA-1) auch nicht umgesetzten Polyester (PE-1) oder nicht umgesetztes Diamin enthalten kann. Das Amid (PA-1) liegt dabei erfindungsgemäß als Gemisch vor, wobei die einzelnen Moleküle beispielsweise in der Verteilung sowie der Länge der Polyester-Blöcke verschieden sein können.

Vorzugsweise werden die Reaktionsbedingugnen bei der Umsetzung gemäß Schritt (i) so gewählt, dass das Amid (PA-1) eine freie Amin-Funktionalität aufweist und eine freie OH-Funktionalität.

Bevorzugt enthält die Zusammensetzung das Amid (PA-1) sowie weitere Komponenten wie Katalysatoren oder Additive, beispielsweise wie Wachse, Stabilisatoren und Füllstoffe. Üblicherweise sind Additive in einer Menge im Bereich von bis zu 5 % in der Zusammensetzung enthalten.

Die Umsetzung gemäß Schritt (ii) erfolgt unter geeigneten Bedingungen, die eine Reaktion des Diisocyanats mit den freien reaktiven Gruppen des Amids (PA-1) erlauben. Die Umsetzung kann erfindungsgemäß in einer geeigneten Apparatur erfolgen, wobei dem Fachmann geeignete Verfahren an sich bekannt sind. Erfindungsgemäß ist es auch möglich, dass Zusatzstoffe oder Hilfsmittel eingesetzt werden, um die Umsetzung gemäß Schritt (i) oder (ii) zu beschleunigen bzw. zu verbessern. Insbesondere können Katalysatoren eingesetzt werden.

Geeignete Katalysatoren für die Umsetzung gemäß Schritt (i) sind dem Fachmann an sich bekannt. Beispielsweise kann ein Katalysator in einer Menge im Bereich von 10 bis 200 ppm eingesetzt werden.

Insbesondere kann die Umsetzung gemäß Schritt (i) oder die Umsetzung gemäß Schritt (ii) oder die Umsetzung gemäß Schritt (i) und Schritt (ii) in einem Extruder erfolgen.

Die Umsetzung gemäß Schritt (i) kann beispielsweise bei einer Temperatur im Bereich von 200 bis 310°C erfolgen, vorzugsweise im Bereich von 220 bis 300°C und insbesondere von 220 bis 280°C, weiter bevorzugt von 230 bis 270°C und einer Verweilzeit von 10 Sekunden bis 30 Minuten, vorzugsweise 15 Sekunden bis 10 Minuten in beispielsweise fließfähigem, erweichten oder vorzugsweise geschmolzenem Zustand der Polyesters und des Diamins, insbesondere durch Rühren, Walzen, Kneten oder vorzugsweise Extrudieren, beispielsweise unter Verwendung von üblichen Plastifizierungsvorrichtungen, wie beispielsweise Mühlen, Knetern oder Extrudern, vorzugsweise in einem Extruder.

Das erfindungsgemäße Verfahren kann weitere Schritte umfassen, beispielsweise Temperaturanpassungen oder formgebende Schritte.

Die Zusammensetzung (Z1) wird dann gemäß Schritt (ii) mit einer Isocyanatzusammensetzung (I1) und einer Polyolzusammensetzung (P1) umgesetzt.

Erfindungsgemäß enthält die Polyolzusammensetzung (P1) mindestens ein Polyol, insbesondere mindestens ein Polycarbonatpolyol (PC1).

Geeignete Polycarbonatpolyole sind dem Fachmann an sich bekannt. Geeignet sind im Rahmen der vorliegenden Erfindung insbesondere aliphatische Polycarbonatdiole. Geeignete Polycarbonatdiole sind beispielsweise Polycarbonatdiole, die auf Alkandiolen basieren. Geeignete Polycarbonatdiole sind streng difunktionelle OH-funktionelle Polycarbonatdiole, bevorzugt streng difunktionelle OH-funktionelle aliphatische Polycarbonatdiole. Geeignete Polycarbonatdiole basieren beispielsweise auf Butandiol, Pentandiol oder Hexandiol, insbesondere 1,4-Butandiol, 1,5-Pentandiol, 1,6-Hexandiol, 3-Methylpentan-(1,5)-diol oder Mischungen davon, besonders bevorzugt 1,4-Butandiol, 1,5-Pentandiol, 1,6-Hexandiol oder Mischungen davon. Bevorzugt werden im Rahmen der vorliegenden Erfindung Polycarbonatdiole basierend auf Butandiol und Hexandiol, Polycarbonatdiolen basierend auf Pentandiol und Hexandiol, Polycarbonatdiolen basierend auf Hexandiol, und Mischungen aus zwei oder mehr dieser Polycarbonatdiole eingesetzt.

Gemäß einer weiteren Ausführungsform betrifft die vorliegende Erfindung auch ein thermoplastisches Polyurethan wie zuvor beschrieben, wobei das mindestens eine Polycarbonatpolyol (PC1) ausgewählt ist aus der Gruppe bestehend aus Polycarbonatdiolen basierend auf Butandiol und Hexandiol, Polycarbonatdiolen basierend auf Pentandiol und Hexandiol, Polycarbonatdiolen basierend auf Hexandiol, und Mischungen aus zwei oder mehr dieser Polycarbonatdiole.

Vorzugsweise weisen die eingesetzten Polycarbonatdiole ein zahlenmittleres Molekulargewichte Mn im Bereich von 500 bis 4000, bestimmt über GPC, bevorzugt im Bereich von 650 bis 3500, bestimmt über GPC, besonders bevorzugt im Bereich von 800 bis 3000, bestimmt über GPC auf.

Gemäß einer weiteren Ausführungsform betrifft die vorliegende Erfindung auch ein thermoplastisches Polyurethan wie zuvor beschrieben, wobei das mindestens eine Polycarbonatpolyol (PC1) ein zahlenmittleres Molekulargewicht Mn im Bereich von 500 bis 4000, bestimmt über GPC, aufweist.

Erfindungsgemäß kann die Polyolzusammensetzung (P1) weitere Polyole enthalten. Geeignete Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Besonders bevorzugt werden Polyesterole oder Polyetherole als Polyole eingesetzt. Besonders bevorzugt sind Polyeterpolyole. Das zahlenmittlere Molekulargewicht der erfindungsgemäß eingesetzten Polyole liegen vorzugsweise zwischen 500 g/mol und 3000 g/mol, bevorzugt zwischen 600 g/mol und 2500 g/mol, insbesondere zwischen 650 g/mol und 2000 g/mol.

Bevorzugte Polyetherole sind erfindungsgemäß Polyethyleneglykole, Polypropylenglykole und Polytetrahydrofurane.

Erfindungsgemäß kann die Polyolzusammensetzung beispielsweise auch ein Lösungsmittel enthalten. Geeignete Lösungsmittel sind dem Fachmann an sich bekannt.

Im Rahmen der vorliegenden Erfindung können bei der Umsetzung in der Polyolzusammensetzung auch Zusatzstoffe oder Hilfsmittel eingesetzt werden, beispielsweise Antioxidantien, UV-Absorber, UV-Filter, Hydrolyseschutzmittel, Wachse, Gleitmittel, Weichmacher, Verarbeitungshilfsmittel, Nukleierungsmittel, Füllstoffe, Flammschutzmittel.

Erfindungsgemäß wird mindestens eine Isocyanatzusammensetzung (I1), enthaltend mindestens ein Polyisocyanat eingesetzt. Vorzugsweise wird als Polyisocyanat ein Diisocyanat eingesetzt. Erfindungsgemäß können auch Mischungen aus zwei oder mehr Diisocyanaten eingesetzt werden. Bevorzugte Diisocyanate sind im Rahmen der vorliegenden Erfindung insbesondere aliphatische oder aromatische Diisocyanate.

Als Isocyanate werden bevorzugt aliphatische, cycloaliphatische, araliphatische und/oder aromatische Isocyanate eingesetzt, weiter bevorzugt Tri-, Tetra-, Penta-, Hexa-, Heptaund/oder Oktamethylendiisocyanat, 2-Methyl-pentamethylen-diisocyanat-1,5, 2-Ethylbutylen-diisocyanat-1,4, Pentamethylen-diisocyanat-1,5, Butylen-diisocyanat-1,4, 1-Iso-cyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat. Besonders bevorzugt wird 4,4'MDI eingesetzt.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trimethylhexamethylen-1,6-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4-und/oder 1-Methyl-2,6-cyclohexandiisocyanat, 4,4'-, 2,4'- und/oder 2,2'-Methylendicyclohexyldiisocyanat (H12MDI).

Gemäß einer weiteren Ausführungsform betrifft die vorliegende Erfindung auch ein thermoplastisches Polyurethan wie zuvor beschrieben, wobei das Polyisocyanat ausgewählt ist aus der Gruppe bestehend aus Methylendiphenyldiisocyanat und aliphatischen Diisocyanaten.

Erfindungsgemäß kann die Isocyanatzusammensetzung in reiner Form oder in Form einer Zusammensetzung enthaltend das Diisocyanat und mindestens ein Lösungsmittel eingesetzt werden. Geeignete Lösungsmittel sind dem Fachmann bekannt. Geeignet sind beispielsweise nicht reaktive Lösungsmittel wie Ethylacetat, Methylethylketon, Tetrahydrofuran und Kohlenwasserstoffe.

Erfindungsgemäß können bei der Umsetzung gemäß Schritt (ii) weitere Einsatzstoffe zugesetzt werden, beispielsweise Katalysatoren oder Hilfs- und Zusatzstoffe.

Katalysatoren, die insbesondere die Reaktion zwischen den NCO-Gruppen und den Hydroxylgruppen der gegenüber Isocyanaten reaktiven Verbindungen beschleunigen, sind beispielsweise tertiären Amine, insbesondere Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan, in einer anderen bevorzugten Ausführungsform sind dies organische Metallverbindungen wie Titansäureester, Eisenverbindungen, bevorzugt Eisen-(III)-acetylacetonat, Zinnverbindungen, bevorzugt Zinndiacetat, Zinndioctoat, Zinndilaurat oder die Zinndialkylsalze aliphatischer Carbonsäuren, bevorzugt Dibutylzinndiacetat, Dibutylzinndilaurat oder Bismutsalzen in denen Bismut bevorzugt in den Oxidationsstufen 2 oder 3 vorliegt, insbesondere 3. Bevorzugt sind Salze von Carbonsäuren. Als Carbonsäuren werden bevorzugt Carbonsäuren mit 6 bis 14 Kohlenstoffatomen, besonders bevorzugt mit 8 bis 12 Kohlenstoffatomen verwendet. Beispiele für geeignete Bismutsalze sind Bismut(III)-neodecanoat, Bismut-2-etyhlhexanoat und Bismut-octanoat.

Die Katalysatoren werden bevorzugt in Mengen von 0,0001 bis 0,1 Gew.-Teilen pro 100 Gew.-Teile der mit Isocyanten reakiven Verbindung (b) eingesetzt. Bevorzugt werden Zinnkataylsatoren eingesetzt, insbesondere Zinndioktoat.

Die Katalysatoren werden üblicherweise in Mengen von 3 ppm bis 2000 ppm, bevorzugt 10 ppm bis 1200 ppm, weiter bevorzugt 20 ppm bis 1000 ppm und am meisten bevorzugt von 30 ppm bis 800 ppm eingesetzt.

Neben Katalysatoren können bei der Umsetzung gemäß Schritt (ii) auch übliche Hilfsstoffe hinzugefügt werden. Genannt seien beispielsweise oberflächenaktive Substanzen, Füllstoffe, weitere Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S. 103-113) entnommen werden.

Erfindungsgemäß wird ein thermoplastisches Polyurethan erhalten. Die Eigenschaften des erfindungsgemäßen thermoplastischen Polyurethans können in weiten Bereichen variieren. Vorzugsweise weist das erfindungsgemäße thermoplastische Polyurethan eine Shore Härte im Bereich von 45A bis 78 D auf, bevorzugt eine Shore Härte im Bereich von 80A bis 70D, besonders bevorzugt eine Shore Härte im Bereich von 70A bis bis 64D, weiter bevorzugt im Bereich von 70A bis 98A.

Gemäß einer weiteren Ausführungsform betrifft die vorliegende Erfindung auch ein thermoplastisches Polyurethan wie zuvor beschrieben, wobei das thermoplastische Polyurethan eine Shore Härte im Bereich von Shore 45 A bis Shore 78 D aufweist.

Gemäß einem weiteren Aspekt betrifft die vorliegende Erfindung auch ein Verfahren zur Herstellung eines thermoplastischen Polyurethans umfassend die Umsetzung einer Isocyanatzusammensetzung (11), enthaltend mindestens ein Polyisocyanat, und einer Polyolzusammensetzung (P1), wobei mindestens ein Diamin (D1) mit einem Molekulargewicht im Bereich von 50 g/mol bis 700 g/mol eingesetzt wird und,
wobei das mindestens eine Diamin (D1) mit einem Molekulargewicht im Bereich von 50 g/mol bis 700 g/mol vor der Umsetzung mit der Isocyanatzusammensetzung (I1) und der Polyolzusammensetzung (P1) mit einem thermoplastischen Polyester (PE-1) zu einem Amid (PA-1) umgesetzt wird.

Insbesondere betrifft die vorliegende Erfindung auch ein Verfahren zur Herstellung eines thermoplastischen Polyurethans, umfassend die Schritte (i) und (ii)
(i) Umsetzung eines thermoplastischen Polyesters (PE-1) mit einem Diamin (D1) unter Erhalt einer Zusammensetzung (Z1) enthaltend einen Amid (PA-1)
(ii) Umsetzung der gemäß Schritt (i) erhaltenen Zusammensetzung (Z1) mit einer Isocyanatzusammensetzung (11), enthaltend mindestens ein Polyisocyanat, und einer Polyolzusammensetzung (P1),
wobei das Diamin (D1) ein Molekulargewicht im Bereich von 50 g/mol bis 700 g/mol aufweist.

Demgemäß betrifft die vorliegende Erfindung ein Verfahren zur Herstellung eines thermoplastischen Polyurethans umfassend die Umsetzung einer Isocyanatzusammensetzung (11), enthaltend mindestens ein Polyisocyanat, und einer Polyolzusammensetzung (P1), umfassend die Schritte (i) und (ii):
(i) Umsetzung eines thermoplastischen Polyesters (PE-1) mit einem Diamin (D1) unter Erhalt einer Zusammensetzung (Z1) enthaltend einen Amid (PA-1)
(ii) Umsetzung der gemäß Schritt (i) erhaltenen Zusammensetzung (Z1) mit einer Isocyanatzusammensetzung (I1), enthaltend mindestens ein Polyisocyanat, und einer Polyolzusammensetzung (P1),
wobei das Diamin (D1) ein Molekulargewicht im Bereich von 50 g/mol bis 700 g/mol aufweist.

Gemäß einer alternativen Ausführungsform betrifft die vorliegende Erfindung ein Verfahren zur Herstellung eines thermoplastischen Polyurethans, umfassend die Umsetzung der Komponenten (a) bis (c):
(a) der Isocyanatzusammensetzung (11), enthaltend mindestens ein Polyisocyanat,
(b) der Polyolzusammensetzung (P1), und
(c) des Diamins (D1) als Kettenverlängerer.

Bezüglich bevorzugter Ausführungsformen wird auf die oben genannten Ausführungen Bezug genommen.

Weiterhin betrifft die vorliegende Erfindung eine Zusammensetzung, enthaltend ein erfindungsgemäßes thermoplastisches Polyurethan. Dabei kann im Rahmen der vorliegenden Erfindung die Zusammensetzung weitere Komponenten wie beispielsweise Füllstoffe, Glasfasern, Weichmacher oder Flammschutzmittel enthalten. Die Zusammensetzung kann eine oder mehrere der gerannten Komponenten enthalten.

Die vorliegende Erfindung betrifft auch die Verwendung eines erfindungsgemäßen thermoplastischen Polyurethans wie zuvor beschrieben, zur Herstellung von Beschichtung, Dämpfungselemente, Faltenbälge, Folien oder Fasern, Formkörpern, Fußböden für Gebäude und Transport, Wirrvliese, bevorzugt Dichtungen, Rollen, Schuhsohlen, Schläuche, Kabel, Kabelstecker, Kabelummantelungen, Kissen, Laminate, Profile, Riemen, Sättel, Schäumen, Steckverbindungen, Schleppkabel, Solarmodule, Verkleidungen in Automobilen. Bevorzugt ist die Verwendung zur Herstellung von Kabelummantelungen. Die Herstellung erfolgt, bevorzugt aus Granulaten, durch Spritzguss, Kalandrieren, Pulversintern, oder Extrusion und/oder durch zusätzliches Schäumen der erfindungsgemäßen Zusammensetzung.

Gemäß einem weiteren Aspekt betrifft die vorliegende Erfindung auch einen Formkörper, enthaltend ein thermoplastisches Polyurethan wie zuvor beschrieben oder ein thermoplastisches Polyurethan erhältlich oder erhalten nach einem Verfahren wie zuvor beschrieben. Bei dem erfindungsgemäßen Formkörper kann es sich beispielsweise um Folien, Formteile, Rollen, Fasern, Verkleidungen in Automobilen, Schläuche, Kabelstecker, Faltenbälge, Schleppkabel, Kabelummantelungen, Dichtungen, Riemen oder Dämpfungselemente handeln.

Aufgrund der guten mechanischen Eigenschaften und des guten Temperaturverhaltens sind die erfindungsgemäßen thermoplastischen Polyurethane sowie die erfindungsgemäßen Zusammensetzungen insbesondere zur Herstellung von Folien, Formteile, Rollen, Fasern, Verkleidungen in Automobilen, Schläuche, Kabelstecker, Faltenbälge, Schleppkabel, Kabelummantelungen, Dichtungen, Riemen oder Dämpfungselementen geeignet. Demgemäß betrifft die vorliegende Erfindung auch Folien, Formteile, Rollen, Fasern, Verkleidungen in Automobilen, Schläuche, Kabelstecker, Faltenbälge, Schleppkabel, Kabelummantelungen, Dichtungen, Riemen oder Dämpfungselemente enthaltend ein thermoplastisches Polyurethan wie zuvor beschrieben oder eine Zusammensetzung wie zuvor beschrieben.

Gemäß einer weiteren Ausführungsform auch einen Formkörper wie zuvor beschrieben, wobei der Formkörper ausgewählt ist aus Folien, Formteilen, Rollen, Fasern, Verkleidungen in Automobilen, Schläuche, Kabelstecker, Faltenbälge, Schleppkabel, Kabelummantelungen, Dichtungen, Riemen oder Dämpfungselementen.

Die nachfolgenden Beispiele dienen der Veranschaulichung der Erfindung.

### BEISPIELE

### 1. Einsatzstoffe

| | |
|---|---|
| PC polyol: | Polycarbonatpolyol |
| E1195A: | Standard TPU (Benchmark), Elastollan 1195 A, thermoplastisches Polyurethan auf Polyetherbasis, erhältlich von BASF Polyurethanes |
| 785A HPM: | Standard HPM TPU (Benchmark), Elastollan 785 A HPM, thermoplastisches Polyurethan auf Polyesterbasis, erhältlich von BASF Polyurethanes |
| Ethacure 300 | Ddimethylthiotoluenediamin (E300) |
| Ethacure 100 | Diethyltoluenediamin (E100) |

### 2. Allgemeines Herstellbeispiel:

2.1 Die Synthese erfolgt mittels Reaktivextrusion in einem selbstreinigenden Zweiwellenextruder, in Anlehnung an das in EP1419188B1 beschriebenen Verfahren. Im Zweiwellenextruder, mit einem Verhältnis von Schneckenlänge zu Schneckendurchmesser von 48, werden Verweilzeiten von mindestens 40 s, bevorzugt größer als 60 s, erreicht. Die nach Umamidierung und anschließendem Kettenaufbau erhaltene Polymerschmelze wird mittels Unterwasser- oder Strangranulierung zu Granulaten verarbeitet.

2.2 Verschiedene Proben wurden hinsichtlich ihrer mechanischen Eigenschaften untersucht. Dabei wurden Zusammensetzungen enthaltend thermoplastische Polyurethane und Ddimethylthiotoluenediamin bzw. Diethyltoluenediamin in einem one-shot Verfahren oder mittels eines Prepolymer-Verfahrens hergestellt.

Im one-shot Verfahren wurden alle Komponenten (Diisocyanate (a), Polyol (b), Kettenverlängerer (c) und Katalysator (e)) in einer ersten Zone des Extruders eingesetzt. Die Temperatur wurde im Bereich von 150°C bis 230°C bei 200rpm eingestellt. Nach dem Durchmischen der Komponenten und Reaktion für mindestens 40s, vorzugsweise mindestens 60 s wurde aus der Polymerschmelze mittels Stranggranulieren oder Unterwassergranulieren ein Granulat erhalten.

Für das semi-Prepolymer Verfahren wurden zunächst Diisocyanate (a), Polyol (b), Kettenverlängerer (c) und Katalysator (e) in einer ersten Zone des Extruders eingesetzt. Nach Durchmischen und Vor-Reaktion dieser Einsatzstoffe wurde in der dritten oder fünften Zone weiterer Kettenverlängerer zugesetzt. Nach und Reaktion für mindestens 40s, vorzugsweise mindestens 60 s wurde aus der Polymerschmelze mittels Stranggranulieren oder Unterwassergranulieren ein Granulat erhalten.

### 2.3 Bedingungen für die Alterung

SI Probenkörper wurden in einem Umluftofen für die gegebene Zeit bei der entsprechenden Temperatur gelagert. Nach der Temperaturbehandlung wurden sie entnommen und auf Raumtemperatur gekühlt. Die mechanischen Untersuchungen wurden an den so behandelten Proben vorgenommen.

Die Untersuchung zur Alterung zeigt, dass die erfindungsgemäßen thermoplastischen Polyurethane mit unterschiedlichem Hartsegmentanteil, die unter Verwendung von Dimethylthiotoluenediamin oder Diethyltoluenediamin hergestellt wurden, nach Lagerung bei 180°C, 190°C und 200°C für 6 Stunden formstabil waren und die Flexibilität des Material erhalten blieb. Weiterhin wiesen sie nach Lagerung bei 150°C für 3000 Stunden noch mehr als 50% der ursprünglichen Reißdehnung auf. Somit erfüllen die Materialien die Erfordernisse einer T4 Norm für Anwendungen im Automobilbereich.

### 3. Beispiele

3.1 Die Herstellung der nachfolgend aufgeführten Beispiele erfolgte in einem Zweiwellenextruder, ZSK58 MC, der Fa. Coperion mit einer Verfahrenslänge von 48D (12 Gehäuse). Der Schmelzeaustrag aus dem Extruder erfolgte mittels Zahnradpumpe. Nach der Schmelzfiltration wurden die Polymerschmelze mittels Unterwassergranulierung zu Granulaten verarbeitet, welche kontinuierlich in einem Heizwirbelbett, bei 60 - 90°C, auf Wassergehalte von unter 0,03% getrocknet wurden.

Das Polybutylenterethphalat, Ultradur B4500 der Fa. BASF SE, wurde in die erste Zone dosiert. Nach dem Schmelzen des PBT wurde das Reagenz zur Umamidierung, z.B. Etacure 100, sowie ggf. ein Katalysator, in der dritten Zone zugeführt. Nach erfolgter Umamidierung wurden die weiteren Reaktionskomponenten, wie Diisocyanat und Polyole, in der fünften Zone hinzugegeben. Die Zuführung weiterer Additive erfolgt in Zone 8. Der Schmelzeaustrag und Unterwassergranulierung erfolgen mit Schmelzetemperaturen von 220 - 230°C.

Die Gehäusetemperaturen liegen für den Einzug, Zone 1, bei 150°C. Das Schmelzen und die Umamidierung, Zonen 2 - 5, erfolgen bei Temperaturen von 250 - 300°C. Der Aufbau des Polymeren in den Zonen 6 - 12 findet bei Gehäusetemperaturen von 240 - 210°C statt. Die Schneckendrehzahl beträgt zwischen 180 und 240 1/min. Der Durchsatz liegt im Bereich von 180 - 220 kg/h.

### 3.2 Zusammensetzungen

| | |
|---|---|
| Beispiel 1 | E1195A mit BDO |
| Beispiel 2 | Polycarbonatpolyol HPM TPU+E100, (97A) |
| Beispiel 3 | 785A HPM TPU mit BDO |
| Beispiel 4 | Polycarbonatpolyol HPM TPU+E100, (92A) |
| Beispiel 5 | Aliphatisches HPM mit E100, (86A) |
| Beispiel 6 | Polycarbonatpolyol aromatisches TPU+E300 |

### 4. Ergebnisse:

### 4.1 Überblick über das Alterungsverhalten für Kabelanwendungen (Klasse D):

| Probe | Alterung bei 150°C/ 3000 h | Alterung bei 150°C/ 3000 h | Alterung bei 150°C/ 3000 h | Alterung bei 150°C/ 3000 h | Reißdehnung nach Alterung >50% | Zugfestigkeit vor Alterung A20 MPa |
|---|---|---|---|---|---|---|
| Beispiel 1 | - | - | - | - | - | + |
| Beispiel 2 | + | + | + | + | + | + |
| Beispiel 3 | + | + | - | - | - | + |

### 4.2 Überblick über das Alterungsverhalten für Kabelanwendungen (Klasse E, 240°C, 6 Stunden):

| Probe | Reißdehnung vor Alterung (%) | Reißdehnung nach Alterung (%) |
|---|---|---|
| Beispiel 2 | 430 | 80 |
| Beispiel 3 | 620 | geschmolzen |

### 5. Ergebnisse nach Lagerung

### 5.1 Lagerung bei 150°C, 3000 Stunden

| Zusammensetzun g | Probe | Zugfestigkeit vor Alterung (MPa) | Zugfestigkeit nach Alterung | Reißdehnung vor Alterung (%) | Reißdehnung nach Alterung |
|---|---|---|---|---|---|
| aromatisches HPM mit E100 | Beispiel 4 | 31 | 16 | 450 | 150 |
| aromatisches HPM mit E100 | Beispiel 2 | 35 | 20 | 430 | 90 |
| aliphatisches HPM mit E100 | Beispiel5 | 16 | 5 | 360 | 110 |
| 785A HPM | Benchmar k | 45 | 11 | 620 | 100 |

### 5.2 Lagerung bei 175°C, 85% R.H., 10 Tage

| Zusammensetzung | Probe | Zugfestigkeit vor Alterung (MPa) | Zugfestigkeit nach Alterung | Reißdehnung vor Alterung (%) | Reißdehnung nach Alterung |
|---|---|---|---|---|---|
| E1195A mit BDO | Standard Referenz | 55 | geschmolzen | 600 | geschmolzen |
| PC polyol TPU+Ethacure 300+MDI | Beispiel 6 | 13 | 10 | 360 | 200 |
| aromatisches HPM E100 | Beispiel 4 | 31 | 14 | 450 | 230 |
| aromatisches HPM mit E100 | Beispiel 2 | 35 | 16 | 430 | 150 |
| aliphatisches(HDI) HPM mit E100 | Beispiel 5 | 16 | 3 | 360 | 80 |
| 785A HPM mit BDO | Benchmark | 45 | 20 | 620 | 190 |

### 5.3 Lagerung bei 200°C, 6 Stunden

| Zusammensetzung | Probe | Zugfestigkeit vor Alterung (MPa) | Zugfestigkeit nach Alterung | Reißdehnung vor Alterung (%) | Reißdehnung nach Alterung |
|---|---|---|---|---|---|
| E1195A mit BDO | Standard Ref | 55 | geschmolzen | 650 | geschmolzen |
| Vergleich 1 mit E100 | Referenz 1 | 9 | 3 | 680 | 1020 |
| Vergleich 2 mit E100 | Referenz 2 | 14 | 7 | 440 | 680 |
| Vergleich 3 mit E100 | Referenz 3 | 15 | 6 | 360 | 310 |
| PC polyol TPU+Ethacure 300+MDI | Beispiel 6 | 13 | 8 | 360 | 100 |
| aromatisches HPM E100 | Beispiel 4 | 31 | 10 | 450 | 300 |
| aromatisches HPM mit E100 | Beispiel 2 | 35 | 13 | 430 | 290 |
| aliphatisches HPM mit E100 | Beispiel 5 | 16 | 9 | 360 | 190 |
| 785A HPM mit BDO | Benchmark | 45 | geschmolzen | 620 | geschmolzen |

### 5.4 Lagerung bei 85°C, 85% R.H., 3000 Stunden

| Zusammensetzung | Probe | Zugfestigkeit vor Alterung (MPa) | Zugfestigkeit nach Alterung | Reißdehnung vor Alterung (%) | Reißdehnung nach Alterung | Shore Härte |
|---|---|---|---|---|---|---|
| aromatisches HPM mit E100 | Beispiel 4 | 31 | 6 | 450 | 80 | 92A |
| aromatisches HPM mit E100 | Beispiel 2 | 35 | 8 | 430 | 80 | 97A |
| aliphatisches HPM mit E100 | Beispiel 5 | 16 | 5 | 360 | 80 | 86A |
| 785A HPM | Benchmark | 45 | 3 | 620 | 30 | 85A |

6. Die folgenden Eigenschaften der erhaltenen Polyurethane wurden nach den genannten Verfahren bestimmt:

| | |
|---|---|
| Shore Härte: | DIN ISO 7619-1 |
| Zugfestigkeit und Reißdehnung: | DIN 53504 |
| Weiterreißwiderstand: | DIN ISO 34-1, B (b) |
| Abriebmessung: | DIN ISO 4649 |
| Dichte: | DIN EN ISO 1183-1, A |
| Druckverformungsrests | DIN ISO 815 |

### Zitierte Literatur

Kunststoffhandbuch, Band VII, herausgegeben von Vieweg und Höchtlen, Carl Hanser Verlag, München 1966 (S. 103-113)
EP 1 419 188 B1

## Patentansprüche

1. Thermoplastisches Polyurethan, erhältlich oder erhalten nach einem Verfahren, umfassend die Umsetzung einer Isocyanatzusammensetzung (I1), enthaltend mindestens ein Polyisocyanat, und einer Polyolzusammensetzung (P1),
wobei mindestens ein Diamin (D1) mit einem Molekulargewicht im Bereich von 50 g/mol bis 700 g/mol eingesetzt wird und
wobei das Diamin D1 vor der Umsetzung mit der Isocyanatzusammensetzung (I1) und der Polyolzusammensetzung (P1) mit einem thermoplastischen Polyester (PE-1) zu einem Amid (PA-1) umgesetzt wird.

2. Thermoplastisches Polyurethan nach Anspruch 1, wobei das Verfahren die Schritte (i) und (ii) umfasst:
(i) Umsetzung eines thermoplastischen Polyester (PE-1) mit einem Diamin (D1) unter Erhalt einer Zusammensetzung (Z1) enthaltend einen Amid (PA-1),
(ii) Umsetzung der gemäß Schritt (i) erhaltenen Zusammensetzung (Z1) mit einer Isocyanatzusammensetzung (I1), enthaltend mindestens ein Polyisocyanat, und einer Polyolzusammensetzung (P1),
wobei das Diamin (D1) ein Molekulargewicht im Bereich von 50 g/mol bis 700 g/mol aufweist.

3. Thermoplastisches Polyurethan nach einem der Ansprüche 1 oder 2, wobei das Diamin (D1) ausgewählt ist aus Verbindungen der allgemeinen Formel (I) oder (II): 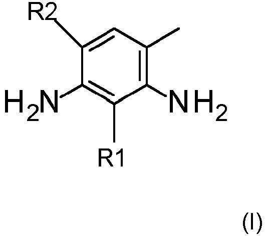
wobei R1 and R2 unabhängig voneinander ausgewählt sind aus der Gruppe bestehend aus O-CH₃, CH₂CH₃, S-CH₃, NH-CH₃, N(CH₃)₂ und H_{,},
oder 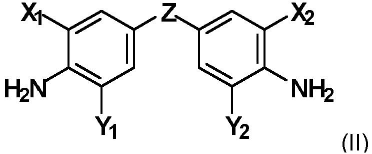 wobei
a) X₁ = X₂ = Y₁ = Y₂ = H,
b) X₁ = X₂ = Y₁ = Y₂ = CH₃
c) X₁ = X₂ = Y₁ = Y₂ = iso Propyl
d) X₁ = X₂ = Y₁ = Y₂ = C₂H₅,
e) X₁ = X₂ = Y₁ = Y₂ = Butyl
f) X₁ = X₂ = Y₁ = Y₂ = tert. Butyl,
g) X₁ = X₂ = H und Y₁ = Y₂ = CH₃,
h) X₁ = X₂ = H und Y₁ = Y₂ = iso Propyl
i) X₁ = X₂ = H und Y₁ = Y₂ = C₂H₅
j) X₁ = X₂ = H und Y₁ = Y₂ = Butyl oder
k) X₁ = X₂ = H und Y₁ = Y₂ = tert. Butyl
und Z ausgewählt ist aus der Gruppe bestehend aus CH₂, CHCH₃, C(CH₃)₂, O und S.

4. Thermoplastisches Polyurethan gemäß einem der Ansprüche 1 bis 3, wobei das Diamin (D1) die allgemeine Formel (III) aufweist: 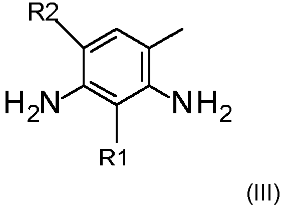 wobei R1 = R2 = S-CH₃ oder R1 = R2 = CH₂CH₃ ist.

5. Thermoplastisches Polyurethan gemäß einem der Ansprüche 1 bis 4, wobei die Polyolzusammensetzung (P1) mindestens ein Polycarbonatpolyol (PC1) enthält.

6. Thermoplastisches Polyurethan gemäß einem der Ansprüche 1 bis 5, wobei der thermoplastische Polyester (PE-1) ein Molekulargewicht gemessen gemäß der Beschreibung im Bereich von 1500 g/mol bis 60000 g/mol aufweist.

7. Thermoplastisches Polyurethan gemäß einem der Ansprüche 1 bis 6, wobei der thermoplastische Polyester (PE-1) ausgewählt ist aus der Gruppe bestehend aus Polyalkylenterephthalaten und Poly-L-Milchsäure.

8. Thermoplastisches Polyurethan gemäß einem der Ansprüche 1 bis 7, wobei der Polyester (PE-1) ein Molekulargewicht gemessen gemäß der Beschreibung im Bereich von 1000 g/mol bis 5000 g/mol aufweist.

9. Thermoplastisches Polyurethan gemäß einem der Ansprüche 1 bis 8, wobei das Polyisocyanat ausgewält ist aus der Gruppe bestehend aus Methylendiphenyldiisocyanat und aliphatischen Diisocyanaten.

10. Thermoplastisches Polyurethan gemäß einem der Ansprüche 1 bis 9, wobei das thermoplastische Polyurethan eine Shore Härte im Bereich von Shore 45 A bis Shore 78 D aufweist.

11. Verfahren zur Herstellung eines thermoplastischen Polyurethans, umfassend die Umsetzung einer Isocyanatzusammensetzung (I1), enthaltend mindestens ein Polyisocyanat, und einer Polyolzusammensetzung (P1),
wobei mindestens ein Diamin (D1) mit einem Molekulargewicht im Bereich von 50 g/mol bis 700 g/mol eingesetzt wird und
wobei das Diamin D1 vor der Umsetzung mit der Isocyanatzusammensetzung (I1) und der Polyolzusammensetzung (P1) mit einem thermoplastischen Polyester (PE-1) zu einem Amid (PA-1) umgesetzt wird.

12. Verfahren zur Herstellung eines thermoplastischen Polyurethans umfassend die Umsetzung einer Isocyanatzusammensetzung (I1), enthaltend mindestens ein Polyisocyanat, und einer Polyolzusammensetzung (P1) nach Anspruch 11, umfassend die Schritte (i) und (ii):
(i) Umsetzung eines thermoplastischen Polyesters (PE-1) mit einem Diamin (D1) unter Erhalt einer Zusammensetzung (Z1) enthaltend einen Amid (PA-1)
(ii) Umsetzung der gemäß Schritt (i) erhaltenen Zusammensetzung (Z1) mit einer Isocyanatzusammensetzung (11), enthaltend mindestens ein Polyisocyanat, und einer Polyolzusammensetzung (P1),
wobei das Diamin (D1) ein Molekulargewicht im Bereich von 50 g/mol bis 700 g/mol aufweist.

13. Formkörper, enthaltend ein thermoplastisches Polyurethan gemäß einem der Ansprüche 1 bis 10 oder ein thermoplastisches Polyurethan erhältlich oder erhalten nach einem Verfahren gemäß Anspruch 11 oder 12.

14. Formkörper nach Anspruch 13, wobei der Formkörper ausgewählt ist aus Folien, Formteilen, Rollen, Fasern, Verkleidungen in Automobilen, Schläuche, Kabelstecker, Faltenbälge, Schleppkabel, Kabelummantelungen, Dichtungen, Riemen oder Dämpfungselementen.

## Claims

1. A thermoplastic polyurethane obtainable or obtained by a process comprising reaction of an isocyanate composition (I1) comprising at least one polyisocyanate and a polyol composition (P1),
wherein at least one diamine (D1) having a molecular weight in the range from 50 g/mol to 700 g/mol is employed and
wherein the diamine D1 is reacted with a thermoplastic polyester (PE-1) to afford an amide (PA-1) before reaction with the isocyanate composition (I1) and the polyol composition (P1).

2. The thermoplastic polyurethane according to claim 1, wherein the process comprises the steps (i) and (ii):
(i) reaction of a thermoplastic polyester (PE-1) with a diamine (D1) to obtain a composition (Z1) comprising an amide (PA-1),
(ii) reaction of the composition (Z1) obtained according to step (i) with an isocyanate composition (I1) comprising at least one polyisocyanate and a polyol composition (P1),
wherein the diamine (D1) has a molecular weight in the range from 50 g/mol to 700 g/mol.

3. The thermoplastic polyurethane according to either of claims 1 or 2, wherein the diamine (D1) is selected from compounds of general formula (I) or (II): 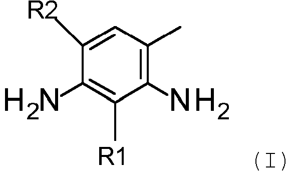
wherein R1 and R2 are independently of one another selected from the group consisting of O-CH₃, CH₂CH₃, S-CH₃, NH-CH₃, N(CH₃)₂ and H,
or 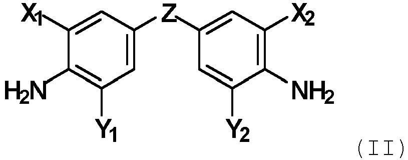 wherein
a) X₁ = X₂ = Y₁ = Y₂ = H,
b) X₁ = X₂ = Y₁ = Y₂ = CH₃
c) X₁ = X₂ = Y₁ = Y₂ = isopropyl
d) X₁ = X₂ = Y₁ = Y₂ = C₂H₅,
e) X₁ = X₂ = Y₁ = Y₂ = butyl
f) X₁ = X₂ = Y₁ = Y₂ = tert- butyl,
g) X₁ = X₂ = H and Y₁ = Y₂ = CH₃,
h) X₁ = X₂ = H and Y₁ = Y₂ = isopropyl
i) X₁ = X₂ = H and Y₁ = Y₂ = C₂H₅
j) X₁ = X₂ = H and Y₁ = Y₂ = butyl or
k) X₁ = X₂ = H and Y₁ = Y₂ = tert- butyl
and Z is selected from the group consisting of CH₂, CHCH₃, C(CH₃)₂, O and S.

4. The thermoplastic polyurethane according to any of claims 1 to 3, wherein the diamine (D1) has the general formula (III): 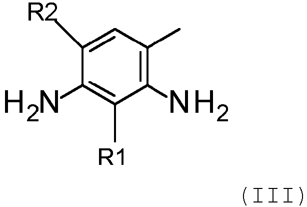 wherein R1 = R2 = S-CH₃ or R1 = R2 = CH₂CH₃.

5. The thermoplastic polyurethane according to any of claims 1 to 4, wherein the polyol composition (P1) comprises at least one polycarbonate polyol (PC1).

6. The thermoplastic polyurethane according to any of claims 1 to 5, wherein the thermoplastic polyester (PE-1) has a molecular weight measured according to the description in the range from 1500 g/mol to 60 000 g/mol.

7. The thermoplastic polyurethane according to any of claims 1 to 6, wherein the thermoplastic polyester (PE-1) is selected from the group consisting of polyalkylene terephthalates and poly-L-lactic acid.

8. The thermoplastic polyurethane according to any of claims 1 to 7, wherein the polyester (PE-1) has a molecular weight measured according to the description in the range from 1000 g/mol to 5000 g/mol.

9. The thermoplastic polyurethane according to any of claims 1 to 8, wherein the polyisocyanate is selected from the group consisting of methylene diphenyl diisocyanate and aliphatic diisocyanates.

10. The thermoplastic polyurethane according to any of claims 1 to 9, wherein the thermoplastic polyurethane has a Shore hardness in the range from Shore 45 A to Shore 78 D.

11. A process for producing a thermoplastic polyurethane comprising reaction of an isocyanate composition (I1) comprising at least one polyisocyanate and a polyol composition (P1),
wherein at least one diamine (D1) having a molecular weight in the range from 50 g/mol to 700 g/mol is employed and
wherein the diamine D1 is reacted with a thermoplastic polyester (PE-1) to afford an amide (PA-1) before reaction with the isocyanate composition (I1) and the polyol composition (P1).

12. A process for producing a thermoplastic polyurethane comprising reaction of an isocyanate composition (I1) comprising at least one polyisocyanate and a polyol composition (P1) according to claim 11 comprising the steps (i) and (ii),
(i) reaction of a thermoplastic polyester (PE-1) with a diamine (D1) to obtain a composition (Z1) comprising an amide (PA-1),
(ii) reaction of the composition (Z1) obtained according to step (i) with an isocyanate composition (I1) comprising at least one polyisocyanate and a polyol composition (P1),
wherein the diamine (D1) has a molecular weight in the range from 50 g/mol to 700 g/mol.

13. A shaped article comprising a thermoplastic polyurethane according to any of claims 1 to 10 or a thermoplastic polyurethane obtainable or obtained by a process according to claim 11 or 12.

14. The shaped article according to claim 13, wherein the shaped article is selected from films, mouldings, wheels/rollers, fibres, automotive trim, hoses, cable plugs, bellows, trailing cables, cable sheathings, seals, belts or damping elements.

## Revendications

1. Polyuréthane thermoplastique, pouvant être obtenu ou obtenu selon un procédé comprenant la transformation d'une composition d'isocyanate (I1), contenant au moins un polyisocyanate, et d'une composition de polyol (P1), au moins une diamine (D1) présentant une masse moléculaire située dans la plage de 50 g/mole à 700 g/mole étant utilisée et
la diamine D1 étant transformée, avant la transformation avec la composition d'isocyanate (I1) et la composition de polyol (P1), avec un polyester thermoplastique (PE-1) en un amide (PA-1).

2. Polyuréthane thermoplastique selon la revendication 1, le procédé comprenant les étapes (i) et (ii) :
(i) transformation d'un polyester thermoplastique (PE-1) avec une diamine (D1) avec obtention d'une composition (Z1) contenant un amide (PA-1),
(ii) transformation de la composition (Z1) obtenue selon l'étape (i) avec une composition d'isocyanate (I1), contenant au moins un polyisocyanate, et une composition de polyol (P1),
la diamine (D1) présentant une masse moléculaire située dans la plage de 50 g/mole à 700 g/mole.

3. Polyuréthane thermoplastique selon l'une des revendications 1 ou 2, la diamine (D1) étant choisie parmi les composés de formule générale (I) ou (II) : 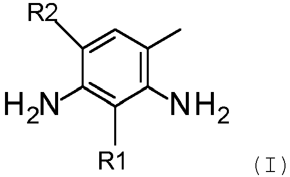
dans laquelle R1 et R2 sont choisis, indépendamment l'un de l'autre, dans le groupe constitué par O-CH₃, CH₂CH₃, S-CH₃, NH-CH₃, N(CH₃)₂ et H,
ou 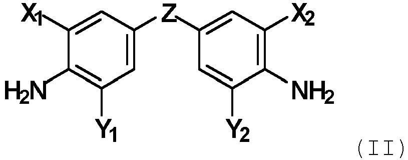 dans laquelle
a) X₁ = X₂ = Y₁ = Y₂ = H,
b) X₁ = X₂ = Y₁ = Y₂ = CH₃
c) X₁ = X₂ = Y₁ = Y₂ = isopropyle
d) X₁ = X₂ = Y₁ = Y₂ = C₂H₅,
e) X₁ = X₂ = Y₁ = Y₂ = butyle
f) X₁ = X₂ = Y₁ = Y₂ = tert- butyle,
g) X₁ = X₂ = H et Y₁ = Y₂ = CH₃,
h) X₁ = X₂ = H et Y₁ = Y₂ = isopropyle
i) X₁ = X₂ = H et Y₁ = Y₂ = C₂H₅
j) X₁ = X₂ = H et Y₁ = Y₂ = butyle ou
k) X₁ = X₂ = H et Y₁ = Y₂ = tert- butyle
et Z est choisi dans le groupe constitué par CH₂, CHCH₃, C(CH₃)₂, O et S.

4. Polyuréthane thermoplastique selon l'une des revendications 1 à 3, la diamine (D1) présentant la formule générale (III) : 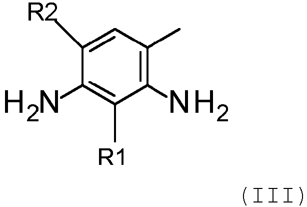 dans laquelle R1 = R2 = S-CH₃ ou R1 = R2 = CH₂CH₃.

5. Polyuréthane thermoplastique selon l'une des revendications 1 à 4, la composition de polyol (P1) contenant au moins un polycarbonatepolyol (PC1).

6. Polyuréthane thermoplastique selon l'une des revendications 1 à 5, le polyester thermoplastique (PE-1) présentant une masse moléculaire, mesurée selon la description, située dans la plage de 1500 g/mole à 60.000 g/mole.

7. Polyuréthane thermoplastique selon l'une des revendications 1 à 6, le polyester thermoplastique (PE-1) étant choisi dans le groupe constitué par les poly(téréphtalates d'alkylène) et l'acide poly-L-lactique.

8. Polyuréthane thermoplastique selon l'une des revendications 1 à 7, le polyester (PE-1) présentant une masse moléculaire, mesurée selon la description, située dans la plage de 1000 g/mole à 5000 g/mole.

9. Polyuréthane thermoplastique selon l'une des revendications 1 à 8, le polyisocyanate étant choisi dans le groupe constitué par le diisocyanate de méthylènediphényle et les diisocyanates aliphatiques.

10. Polyuréthane thermoplastique selon l'une des revendications 1 à 9, le polyuréthane thermoplastique présentant une dureté Shore située dans la plage de Shore 45A à Shore 78D.

11. Procédé de préparation d'un polyuréthane thermoplastique, comprenant la transformation d'une composition d'isocyanate (I1), contenant au moins un polyisocyanate, et d'une composition de polyol (P1),
au moins une diamine (D1) présentant une masse moléculaire située dans la plage de 50 g/mole à 700 g/mole étant utilisée et
la diamine D1 étant transformée, avant la transformation avec la composition d'isocyanate (I1) et la composition de polyol (P1), avec un polyester thermoplastique (PE-1) en un amide (PA-1).

12. Procédé de préparation d'un polyuréthane thermoplastique, comprenant la transformation d'une composition d'isocyanate (I1), contenant au moins un polyisocyanate, et d'une composition de polyol (P1) selon la revendication 11, comprenant les étapes (i) et (ii) :
(i) transformation d'un polyester thermoplastique (PE-1) avec une diamine (D1) avec obtention d'une composition (Z1) contenant un amide (PA-1),
(ii) transformation de la composition (Z1) obtenue selon l'étape (i) avec une composition d'isocyanate (I1), contenant au moins un polyisocyanate, et une composition de polyol (P1),
la diamine (D1) présentant une masse moléculaire située dans la plage de 50 g/mole à 700 g/mole.

13. Corps façonné, contenant un polyuréthane thermoplastique selon l'une des revendications 1 à 10 ou un polyuréthane thermoplastique obtenu ou pouvant être obtenu selon un procédé selon la revendication 11 ou 12.

14. Corps façonné selon la revendication 13, le corps façonné étant choisi parmi les feuilles, les pièces moulées, les rouleaux, les fibres, les revêtements dans des automobiles, les flexibles, les connecteurs, les soufflets, les câbles de remorquage, les revêtements de câble, les joints, les courroies ou les éléments amortisseurs.
